# EUROPEAN PATENT APPLICATION

(11) **EP 4 746 272 A1**
(43) Date of publication of application: **20.05.2026**
(21) Application number: 24839903.2
(22) Date of filing: 27.05.2024
(51) Int. Cl.: H02M 3/157, H02M 3/158, H02M 1/00, G06F 1/26

(54) **ELECTRONIC DEVICE AND OPERATION METHOD THEREFOR**

(30) Priority: 12.07.2023 KR 20230090646; 02.08.2023 KR 20230101033
(71) Applicant: Samsung Electronics Co., Ltd., Suwon-si, Gyeonggi-do 16677 (KR)
(72) Inventor: CHOI, Hangseok, Suwon-si, Gyeonggi-do 16677 (KR); KANG, Sangwoo, Suwon-si, Gyeonggi-do 16677 (KR); YUN, Chuleun, Suwon-si, Gyeonggi-do 16677 (KR); LEE, Kyunghwan, Suwon-si, Gyeonggi-do 16677 (KR); CHOI, Kyusik, Suwon-si, Gyeonggi-do 16677 (KR)
(74) Representative: Gulde & Partner
(86) International application number: PCT/KR2024/007182
(87) International publication number: WO 2025/014086

(57) **Abstract**

This electronic device may comprise: a battery; a load; a converter configured to provide power to the load on the basis of power provided from the battery; an integration circuit; a first comparison circuit; a second comparison circuit; a pulse width modulation (PWM) control circuit; and a controller. The controller may be configured to output an integration voltage on the basis of a signal related to a switch current of a first switch among a plurality of switches of the converter by using the integration circuit. The controller may be configured to output a control voltage on the basis of an output voltage of the converter and a target voltage of the output voltage by using the first comparison circuit. The controller may be configured to check an operation mode of the converter on the basis of an input voltage of the converter and a reference voltage of the input voltage by using the second comparison circuit. The controller may be configured to output a PWM signal on the basis of the operation mode, the control voltage, and the integration voltage by using the PWM control circuit. The controller may be configured to control the plurality of switches of the converter on the basis of the PWM signal. Various other embodiments are possible.

## Description

### [Technical Field]

The disclosure relates to an electronic device according to an embodiment and a method of operating the same.

### [Background Art]

An organic light emitting diode (OLED) is one type of light emitting diode (LED) semiconductor devices including an organic compound layer. OLED-based displays are being spotlighted as the next-generation display that may replace liquid crystal displays (LCDs), and many companies are conducting research thereon. The advantages of OLED are that a backlight is not required because the device is self-emissive unlike an LCD, and thus, a thin-film structure is possible, and it is lightweight and provides a clear readability even outdoors. In addition, the response speed is very excellent compared to that of LCD, and in the case of displaying a dark image, since the power consumption of the element is reduced, the power efficiency is good in an actual use environment.

In the case of an OLED having a driving voltage of 4.6[V], a lithium-ion battery of a mobile device has an operating voltage of 3[V] to 4.5[V], so a boost converter circuit may be used to design a 4.6[V] voltage to be generated, based on the operating voltage of the battery. However, in the case that an OLED using a driving voltage of about 3[V] is applied to a mobile device, a boost converter circuit cannot be applied due to a voltage range of 3[V] to 4.5[V] of a lithium-ion battery. In this case, a non-inverting type buck-boost converter supporting all of the buck mode, the boost mode, and the buck-boost mode may be used. The non-inverting buck-boost converter operates in buck mode in most voltage ranges to increase efficiency and extend battery usage time, and when the battery voltage drops to about 3[V], since the non-inverting buck-boost converter cannot stably obtain an output voltage of 3[V] using the buck operation, the buck-boost mode is applied. When operating in the buck mode, the current of the inductor and each switch of the buck-boost converter is reduced, thereby allowing power conversion with higher efficiency.

The above-described information may be provided as related art for helping the understanding of the disclosure. No assertion or determination is made as to whether any of the above-described contents is applicable as prior art related to the disclosure.

### [Detailed Description of the Invention]

### [Technical Problem]

### [Technical Solution]

According to an embodiment, an electronic device may include a battery, a load, a converter configured to provide power to the load, based on power provided from the battery, an integral circuit, a first comparison circuit, a second comparison circuit, a pulse width modulation (PWM) control circuit, and a controller. The controller may output, using the integral circuit, an integral voltage based on a signal associated with a switch current of a first switch of a plurality of switches of the converter. The controller may output, using the first comparison circuit, a control voltage based on an output voltage of the converter and a target voltage of the output voltage. The controller may identify, using the second comparison circuit, an operation mode of the converter based on an input voltage of the converter and a reference voltage of the input voltage. The controller may output, using the PWM control circuit, a PWM signal based on the operation mode, the control voltage, and the integral voltage. The controller may control the plurality of switches of the converter based on the PWM signal.

According to an embodiment, a method of operating an electronic device may include outputting an integral voltage based on a signal associated with a switch current of a first switch of a plurality of switches of the converter of the electronic device 101. The method may include outputting a control voltage, based on an output voltage of the converter and a target voltage of the output voltage. The method may include identifying an operation mode of the converter, based on an input voltage of the converter and a reference voltage of the input voltage. The method may include outputting a PWM signal, based on the operation mode, the control voltage, and the integral voltage. The method may include controlling the plurality of switches of the converter, based on the PWM signal.

According to an embodiment, in a computer-readable recording medium in which instructions configured to perform at least one operation by the controller of the electronic device are stored, the at least one operation may include outputting an integral voltage, based on a signal associated with a switch current of a first switch of a plurality of switches of the converter of the electronic device. The at least one operation may include outputting a control voltage, based on an output voltage of the converter and a target voltage of the output voltage. The at least one operation may include identifying an operation mode of the converter, based on an input voltage of the converter and a reference voltage of the input voltage. The at least one operation may include outputting a PWM signal, based on the operation mode, the control voltage, and the integral voltage. The at least one operation may include controlling the plurality of switches of the converter, based on the PWM signal.

### [Advantageous Effects]

### [Brief Description of Drawings]

FIG. 1 is a block diagram of an electronic device in a network environment according to an embodiment.
FIG. 2 is a block diagram of an electronic device according to an embodiment.
FIG. 3 is a block diagram of an electronic device according to an embodiment.
FIG. 4 is a diagram illustrating an operation of a converter of an electronic device according to an embodiment.
FIG. 5 is a diagram illustrating an operation of a converter of an electronic device according to an embodiment.
FIG. 6 is a diagram illustrating an operation of a converter of an electronic device according to an embodiment.
FIG. 7 is a diagram illustrating an operation of a converter of an electronic device according to an embodiment.
FIG. 8 is a diagram illustrating an operation of an electronic device according to a comparative example.
FIG. 9 is a circuit diagram of a circuit included in an electronic device according to an embodiment.
FIG. 10 is a diagram illustrating an operation of an electronic device according to an embodiment.
FIG. 11 is a flowchart illustrating an operation method of an electronic device according to an embodiment.
FIG. 12 is a flowchart illustrating an operation method of an electronic device according to an embodiment.

### [Mode for Carrying out the Invention]

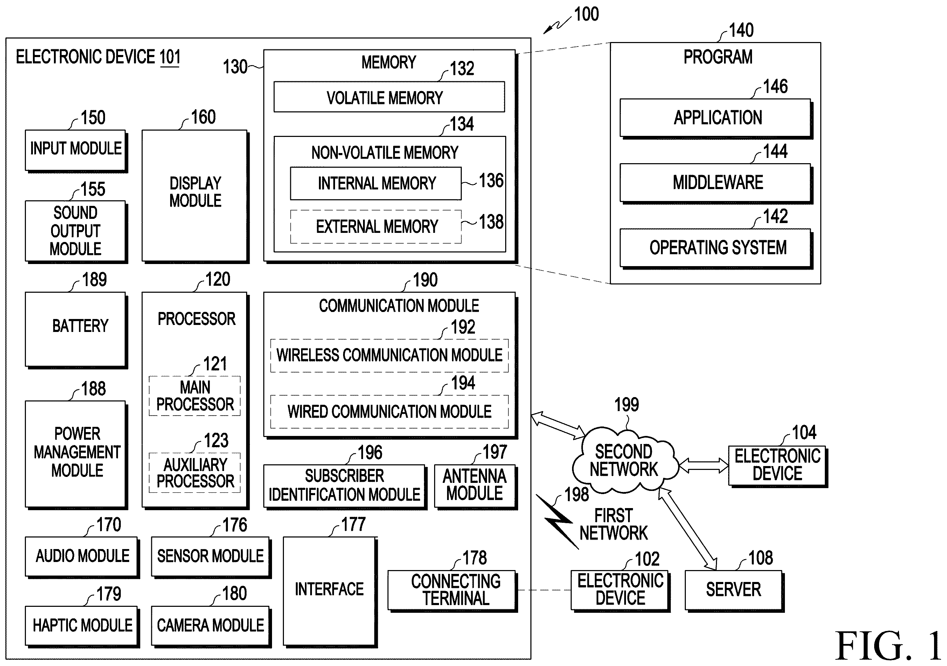

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

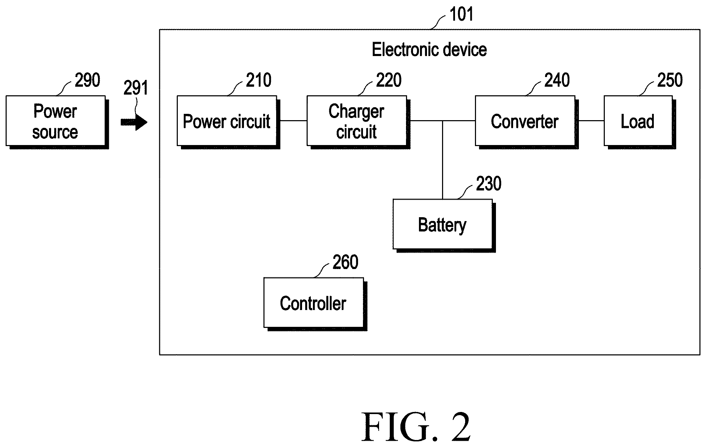

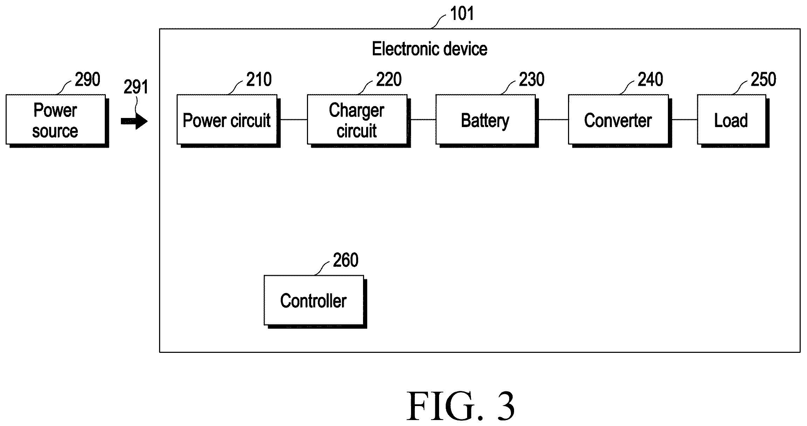

FIG. 2 is a block diagram of an electronic device according to an embodiment. FIG. 3 is a block diagram of an electronic device according to an embodiment.

According to an embodiment, the electronic device 101 may be a device (e.g., a notebook computer, a tablet, a portable communication device (e.g., a smartphone), a computer device, a portable multimedia device, a portable medical device, a camera, a wearable device, or a home appliance) that receives power 291 from a power source 290. The power source 290 may be a device (e.g., a wired charging device or a wireless charging device) that provides power 291 (e.g., wired power or wireless power) to the electronic device 101. The power source 290 may be a device (e.g., an adapter) for transferring external power to the electronic device 101. The power source 290 is a device providing power, and there is no limitation on the type thereof. The electronic device 101 is a device receiving power, and there is no limitation on the type thereof.

Referring to FIGS. 2 and 3, according to an embodiment, the electronic device 101 may include a power circuit 210, a charger circuit 220, a battery 230, a converter 240, a load 250, and a controller 260. Referring to FIGS. 2 and 3, a connection structure of the charger circuit 220, the battery 230, and the converter 240 included in the electronic device 101 may be understood. Referring to FIG. 2, according to an embodiment, the output terminal of the charger circuit 220 may be electrically connected to the input terminal of the converter 240 and the battery 230. Referring to FIG. 3, according to an embodiment, the output terminal of the charger circuit 220 may be electrically connected to the input terminal of the battery 230, and the output terminal of the battery 230 may be electrically connected to the input terminal of the converter 240. The connection structure of the charger circuit 220, the battery 230, and the converter 240 is not limited to the embodiments of FIGS. 2 and 3.

The operation of the electronic device 101 according to an embodiment may be controlled by the controller 260 (e.g., the processor 120 of FIG. 1) of the electronic device 101. Performing a specific operation by the electronic device 101 may refer to that the electronic device 101 or a component included in the electronic device 101 is controlled by the controller 260 of the electronic device 101. The electronic device 101 may include one or more controllers 260, and hereinafter, even in a case in which the controller 260 is implemented as a plurality of components, the description may be made in the form of "an operation of the electronic device 101" or "an operation of the controller 260" for the sake of descriptive convenience.

According to an embodiment, the electronic device 101 (e.g., the controller 260) may receive power (e.g., wired power or wireless power) provided from the power source 290 through the power circuit 210. For example, the power circuit 210 may include a wired power circuit (e.g., a circuit including a wired connector) and/or a wireless power circuit (e.g., a circuit including a reception coil and a rectifier).

According to an embodiment, the electronic device 101 (e.g., the controller 260) may provide power to the charger circuit 220 through the power circuit 210. The electronic device 101 (e.g., the controller 260) may supply power to the battery 230 through the charger circuit 220. The charger circuit 220 may be a circuit providing power to the battery 230, based on power provided from the external power source 290. The charger circuit 220 may receive power from the power circuit 210. The charger circuit 220 may provide power to the battery 230, based on the power provided from the power circuit 210. The charger circuit 220 may convert the input voltage to the output voltage. The output voltage of the charger circuit 220 may be the input voltage (e.g., charging voltage) of the battery 230. The battery 230 may be charged based on the output voltage (e.g., the charging voltage) of the charger circuit 220.

According to an embodiment, the electronic device 101 (e.g., the controller 260) may supply power to the load 250 through the converter 240. The load 250 may be a component of the electronic device 101 and may be a component that consumes power. The converter 240 may provide power to the load 250 based on the power provided to the converter 240. Referring to FIG. 2, for example, the converter 240 may receive power from the battery 230. Referring to FIG. 2, for example, the converter 240 may receive power from the charger circuit 220. Referring to FIG. 3, for example, the converter 240 may receive power from the battery 230. The converter 240 may convert an input voltage to the converter 240 into a voltage suitable for the load 250 electrically connected to the converter 240. Although the converter 240 and the load 250 are illustrated as being one in FIGS. 2 and 3, this is for the sake of descriptive convenience, and the number of the converter 240 and the load 250 is not limited. For example, referring to FIG. 2, when there are two converters 240 and two loads 250, the input of the first converter may be connected to the output of the charger circuit 220 and the battery 230 and the first load may be connected to the output of the first converter, and the input of the second converter may be connected to the output of the charger circuit 220 and the battery 230 and the second load may be connected to the output of the second converter. In this case, a plurality of converters 240 may be electrically connected to the output terminal of the charger circuit 220 and the battery 230. Referring to FIG. 3, for example, when there are two converters 240 and two loads 250, the first converter may be connected to the battery 230 and the first load may be connected to the output of the first converter, and the input of the second converter may be connected to the battery 230 and the second load may be connected to the output of the second converter. In this case, a plurality of converters 240 may be electrically connected to the battery 230.

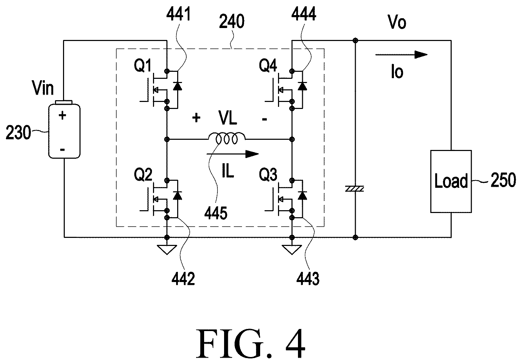

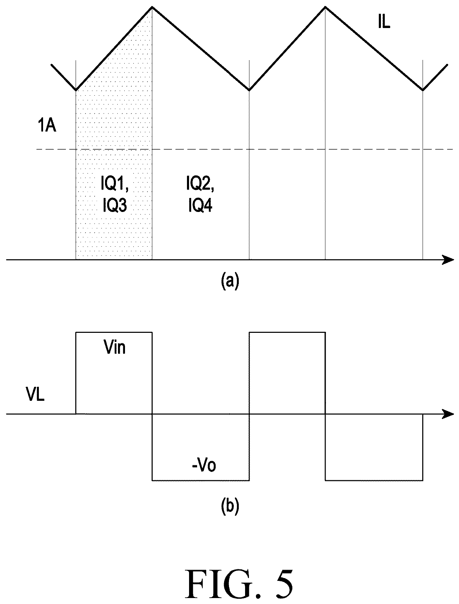

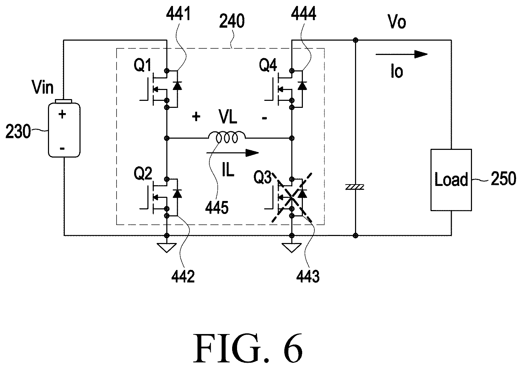

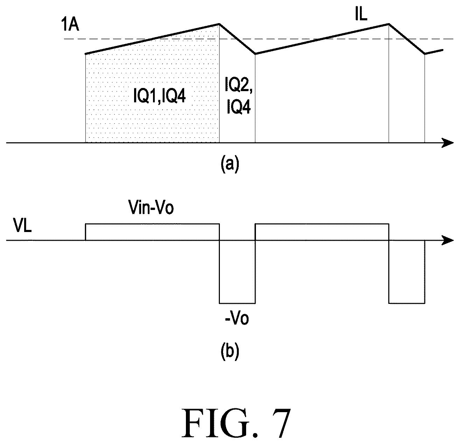

FIG. 4 is a diagram illustrating an operation of a converter of an electronic device according to an embodiment. FIG. 5 is a diagram illustrating an operation of a converter of an electronic device according to an embodiment. FIG. 6 is a diagram illustrating an operation of a converter of an electronic device according to an embodiment. FIG. 7 is a diagram illustrating an operation of a converter of an electronic device according to an embodiment.

Referring to FIGS. 4 and 6, according to an embodiment, the converter 240 may be implemented as a buck-boost converter. The converter 240 may include a plurality of switches 441, 442, 443, and 444 (e.g., Q1, Q2, Q3, and Q4) and at least one inductor 445. The plurality of switches 441, 442, 443, and 444 (e.g., Q1, Q2, Q3, and Q4) may include a first switch 441 (e.g., Q1), a second switch 442 (e.g., Q2), a third switch 443 (e.g., Q3), and a fourth switch 444 (e.g., Q4). The electronic device 101 (e.g., the controller 260) may control the converter 240 to perform buck conversion, boost conversion, or buck-boost conversion by controlling the plurality of switches 441, 442, 443, and 444 (e.g., Q1, Q2, Q3, and Q4) of the converter 240. The electronic device 101 (e.g., the controller 260) may control the plurality of switches 441, 442, 443, and 444 (e.g., Q1, Q2, Q3, and Q4) of the converter 240, based on the operation mode (e.g., a buck mode, a boost mode, or a buck-boost mode) of the converter 240. For example, the electronic device 101 (e.g., the controller 260) may pulse width modulation (PWM)- switch (e.g., alternately control) Q1 and Q2, control Q4 to an on state, and control Q3 to an off state for buck converting (e.g., a buck mode or a buck operation). For example, the electronic device 101 (e.g., the controller 260) may PWM-switch Q3 and Q4, control Q1 to be in an on state, and control Q2 to be in an off state for boost converting (e.g., a boost mode or a boost operation). For example, the electronic device 101 (e.g., the controller 260) may PWM-switch Q1 and Q2 and PWM-switch Q3 and Q4, and may switch Q1 and Q3 identically and switch Q2 and Q4 identically for buck-boost converting (e.g., a buck-boost mode or a buck-boost operation). For example, the electronic device 101 (e.g., the controller 260) may PWM-switch (e.g., alternately control) the first pair of Q1 and Q3, and the second pair of Q2 and Q4, for buck-boost converting (e.g., a buck-boost mode or a buck-boost operation).

For example, referring to FIGS. 4 and 5, a buck-boost conversion (e.g., a buck-boost mode or a buck-boost operation) may be understood. Referring to FIG. 4, the electronic device 101 (e.g., the controller 260) may alternately control the first switch 441 and the second switch 442, alternately control the third switch 443 and the fourth switch 444, and identically control the first switch 441 and the third switch 443, and identically control the second switch 442 and the fourth switch 444 for a buck-boost conversion (e.g., a buck-boost mode or a buck-boost operation). FIG. 5 is a graph illustrating a current (e.g., IL) and a voltage VL of at least one inductor 445 included in the converter 240 when the operation mode of the converter 240 is a buck-boost mode. Referring to (b) of FIG. 5, when the operation mode of the converter 240 is a buck-boost mode, during a period in which the first switch 441 and the third switch 443 are controlled to be on, the voltage (e.g., VL) of at least one inductor 445 may be the voltage (e.g., Vin) of the battery 230. Referring to (b) of FIG. 5, when the operation mode of the converter 240 is a buck-boost mode, during a time when the second switch 442 and the fourth switch 444 are controlled to be on, the voltage (e.g., VL) of at least one inductor 445 may be the inverted voltage (e.g., -Vo) of the voltage (e.g., Vo) of the load 250. Referring to (a) of FIG. 5, when the operation mode of the converter 240 is a buck-boost mode, during a period in which the first switch 441 and the third switch 443 are controlled to be on, the current of the first switch 441 (e.g., IQ1), the current of at least one inductor 445 (e.g., IL), and the current of the third switch 443 (e.g., IQ3) may increase. Referring to (a) of FIG. 5, when the operation mode of the converter 240 is a buck-boost mode, during a period in which the second switch 442 and the fourth switch 444 are controlled to be on, the current of the second switch 442 (e.g., IQ2), the current of the at least one inductor 445 (e.g., IL), and the current of the fourth switch 444 (e.g., IQ4) may decrease. Referring to (a) of FIG. 5, when the operation mode of the converter 240 is a buck-boost mode, as the first pair (e.g., 441 and 443) and the second pair (e.g., 442 and 444) of the plurality of switches 441, 442, 443, and 444 of the converter 240 are alternately controlled, the current (e.g., IL) of the at least one inductor 445 may repeatedly increase and decrease around a current (e.g., 2[A]) greater than the target current (e.g., 1[A]).

For example, referring to FIGS. 6 and 7, a buck conversion (e.g., a buck mode or a buck operation) may be understood. Referring to FIG. 6, the electronic device 101 (e.g., the controller 260) may alternately control the first switch 441 and the second switch 442, control the third switch 443 to be off, and control the fourth switch 444 to be on for a buck conversion (e.g., a buck mode or a buck operation). FIG. 7 is a graph illustrating a current (e.g., IL) and a voltage VL of at least one inductor 445 included in the converter 240 when the operation mode of the converter 240 is a buck mode. Referring to (b) of FIG. 7, when the operation mode of the converter 240 is a buck mode, during a period in which the first switch 441 and the fourth switch 444 are controlled to be on, the voltage (e.g., VL) of at least one inductor 445 may be the difference (e.g., Vin-Vo) between the voltage (e.g., Vin) of the battery 230 and the voltage (e.g., Vo) of the load 250. Referring to (b) of FIG. 7, when the operation mode of the converter 240 is a buck mode, during a time when the second switch 442 and the fourth switch 444 are controlled to be on, the voltage (e.g., VL) of at least one inductor 445 may be the inverted voltage (e.g., -Vo) of the voltage (e.g., Vo) of the load 250. Referring to (a) of FIG. 7, when the operation mode of the converter 240 is a buck mode, during a period in which the first switch 441 and the fourth switch 444 are controlled to be on, the current of the first switch 441 (e.g., IQ1), the current of at least one inductor 445 (e.g., IL), and the current of the fourth switch 444 (e.g., IQ4) may increase. Referring to (a) of FIG. 7, when the operation mode of the converter 240 is a buck mode, during a period in which the second switch 442 and the fourth switch 444 are controlled to be on, the current of the second switch 442 (e.g., IQ2), the current of the at least one inductor 445 (e.g., IL), and the current of the fourth switch 444 (e.g., IQ4) may decrease. Referring to (a) of FIG. 7, when the operation mode of the converter 240 is a buck mode, as the first switch 441 and the second switch 442 among the plurality of switches 441, 442, 443, and 444 of the converter 240 are alternately controlled, the third switch 443 is controlled to be off, and the fourth switch 444 is controlled to be on, the current (e.g., IL) of at least one inductor 445 may repeatedly increase and decrease around the target current (e.g., 1[A]). According to an embodiment, referring to FIGS. 5 and 7, the duty cycle when the operation mode of the converter 240 is a buck-boost mode may be different from the duty cycle when the operation mode of the converter 240 is a buck mode. The duty cycle when the operation mode of the converter 240 is a buck-boost mode and the duty cycle when the operation mode of the converter 240 is a buck mode may be the same.

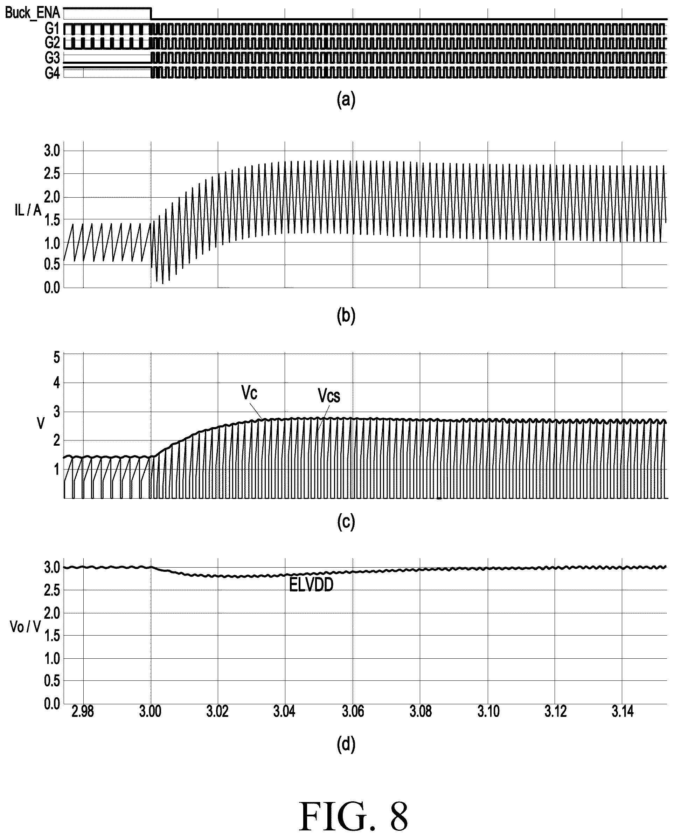

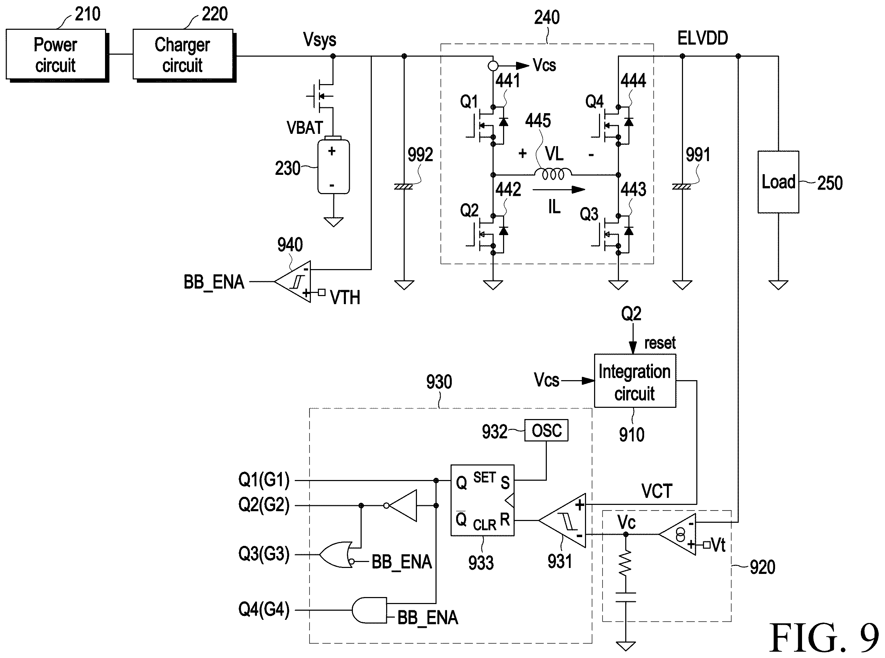

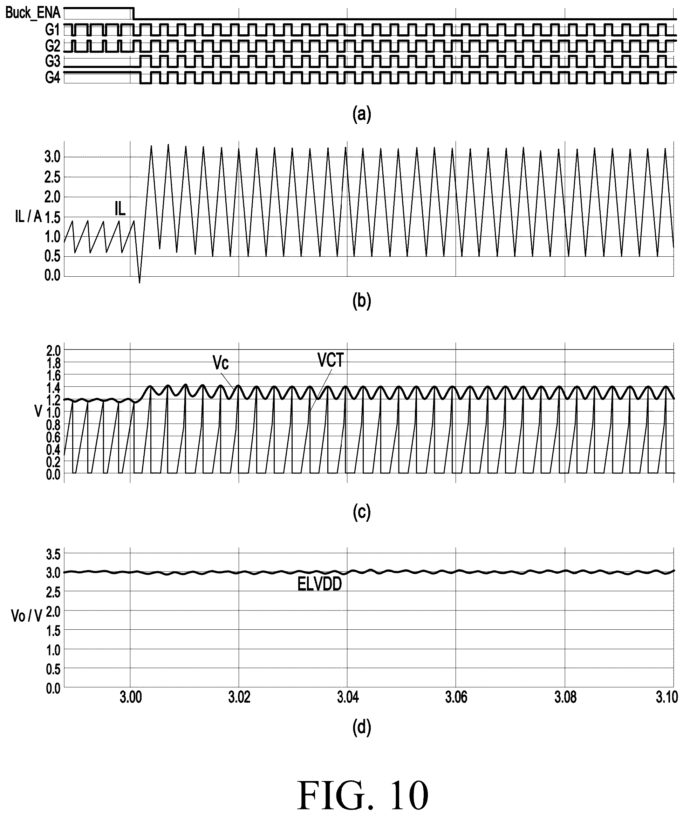

FIG. 8 is a diagram illustrating an operation of an electronic device according to a comparative example. FIG. 9 is a circuit diagram of a circuit included in an electronic device according to an embodiment. FIG. 10 is a diagram illustrating an operation of an electronic device according to an embodiment.

FIG. 10 is a graph illustrating an operation of an electronic device 101 including the integral circuit 910 of FIG. 9 according to an embodiment. FIG. 8 is a graph illustrating an operation of the electronic device 101 that does not include the integral circuit 910 according to a comparative example.

Referring to FIG. 9, according to an embodiment, the electronic device 101 may include an integral circuit 910. The electronic device 101 (e.g., the controller 260) may output an integral voltage (e.g., VCT) by using the integral circuit 910. The integral circuit 910 may output the integral voltage (e.g., VCT) based on a signal (e.g., Vcs) related to a switching current of the first switch 441 of the converter 240. The signal (e.g., Vcs) related to the switching current of the first switch 441 may be a signal (e.g., a voltage) proportional to the switching current of the first switch 441. The switching current of the first switch 441 may be a current input to the first switch 441 of the converter 240 (e.g., by the power of the battery 230). The electronic device 101 (e.g., the controller 260) may output an integral voltage (e.g., VCT) corresponding to integration of a signal (e.g., Vcs) related to a switching current of the first switch 441, by using the integral circuit 910. The electronic device 101 (e.g., the controller 260) may control the integral circuit 910 to reset the integral circuit 910, based on the state in which the second switch 442 of the converter 240 is on.

Referring to FIG. 9, according to an embodiment, the electronic device 101 may include a first comparison circuit 920. The electronic device 101 (e.g., the controller 260) may output a control voltage (e.g., Vc) by using the first comparison circuit 920. The first comparison circuit 920 may output the control voltage (e.g., Vc) based on the output voltage (e.g., ELVDD) of the converter 240 and the target voltage of the output voltage of the converter 240 (e.g., Vt). The output voltage (e.g., ELVDD) of the converter 240 may be the voltage of the power provided from the converter 240 to the load 250. The target voltage (e.g., Vt) of the output voltage of the converter 240 may be determined based on the load 250. For example, in order to provide 3[V] voltage to the load 250, the target voltage (e.g., Vt) of the output voltage of the converter 240 may be determined to be 3[V]. The electronic device 101 (e.g., the controller 260) may output the control voltage (e.g., Vc) by using the first comparison circuit 920, based on the output voltage (e.g., ELVDD) of the converter 240 and the target voltage (e.g., Vt) of the output voltage of the converter 240. The electronic device 101 (e.g., the controller 260) may output the control voltage (e.g., Vc) by using the first comparison circuit 920, based on the difference between the output voltage (e.g., ELVDD) of the converter 240 and the target voltage (e.g., Vt) and the integral value of the difference. The first comparison circuit 920 may output the control voltage (e.g., Vc) by adding the difference between the output voltage (e.g., ELVDD) of the converter 240 and the target voltage (e.g., Vt) and the integral value of the difference.

Referring to FIG. 9, according to an embodiment, the electronic device 101 may include a second comparison circuit 940. The electronic device 101 (e.g., the controller 260) may identify the operation mode of the converter 240 by using the second comparison circuit 940. The operation mode of the converter 240 may include a buck mode, a boost mode, and a buck-boost mode. The operation mode of the converter 240 may be understood with reference to FIGS. 4, 5, 6, and 7. The second comparison circuit 940 may output a signal (e.g., BB_ENA of FIG. 9 or Buck_ENA of FIG. 10) related to the operation mode of the converter 240, based on the input voltage (e.g., Vsys or VBAT) of the converter 240 and the reference voltage (e.g., VTH) of the input voltage of the converter 240. The reference voltage of the input voltage of the converter 240 may be greater than the target voltage of the output voltage of the converter 240. For example, a signal (e.g., BB_ENA of FIG. 9 or Buck_ENA of FIG. 10) related to the operation mode of the converter 240 may include a first signal and a second signal. For example, the first signal may correspond to a buck mode and the second signal may correspond to a buck-boost mode. For example, the electronic device 101 (e.g., the controller 260) may output, by using the second comparison circuit 940, a first signal (e.g., a signal corresponding to a buck mode) related to the operation mode of the converter 240, based on the input voltage (e.g., Vsys or VBAT) of the converter 240 exceeding the reference voltage (e.g., VTH). The electronic device 101 (e.g., the controller 260) may identify the operation mode of the converter 240 as a first mode (e.g., a buck mode), based on the input voltage (e.g., Vsys or VBAT) of the converter 240 exceeding the reference voltage (e.g., VTH). For example, the electronic device 101 (e.g., the controller 260) may output, by using the second comparison circuit 940, a second signal (e.g., a signal corresponding to the buck-boost mode) related to the operation mode of the converter 240, based on the input voltage (e.g., Vsys or VBAT) of the converter 240 being equal to or less than the reference voltage (e.g., VTH). The electronic device 101 (e.g., the controller 260) may identify the operation mode of the converter 240 as a second mode (e.g., a buck-boost mode), based on the input voltage (e.g., Vsys or VBAT) of the converter 240 being equal to or less than the reference voltage (e.g., VTH). In FIGS. 8 and 10, when the signal (e.g., BB_ENA of FIG. 9 or Buck_ENA of FIG. 10) related to the operation mode of the converter 240 is the first signal (e.g., 1), the converter 240 may operate in a buck mode. In FIGS. 8 and 10, when the signal (e.g., BB_ENA of FIG. 9 or Buck_ENA of FIG. 10) related to the operation mode of the converter 240 is the second signal (e.g., 0), the converter 240 may operate in a buck-boost mode.

Referring to FIG. 9, according to an embodiment, the electronic device 101 may include a pulse width modulation (PWM) control circuit 930. The electronic device 101 (e.g., the controller 260) may output a PWM signal (e.g., G1, G2, G3, and G4) by using the PWM control circuit 930. The PWM control circuit 930 may output a PWM signal (e.g., G1, G2, G3, and G4) based on the operation mode (e.g., a signal related to the operation mode, e.g., BB_ENA of FIG. 9 or Buck_ENA of FIG. 10) of the converter 240, the control voltage (e.g., Vc), and the integral voltage (e.g., VCT). For example, the PWM signal may include a first signal (e.g., G1) corresponding to the first switch 441 (e.g., Q1), a second signal (e.g., G2) corresponding to the second switch 442 (e.g., Q2), a third signal (e.g., G3) corresponding to the third switch 443 (e.g., Q3), and a fourth signal (e.g., G4) corresponding to the fourth switch 444 (e.g., Q4). The PWM control circuit 930 may include a comparator 931, an oscillator 932, a controller 933, and at least one logic circuit (e.g., AND, OR, NAND, NOR, XOR, and XNOR). The comparator 931 may compare a control voltage (e.g., Vc) and an integral voltage (e.g., VCT). The controller 933 may output an output signal (e.g., Q or Q-) based on a comparison result of the control voltage (e.g., Vc) and the integral voltage (e.g., VCT) by the comparator 931 and the signal of the oscillator 932. The PWM control circuit 930 may output the PWM signal (e.g., G1, G2, G3, and G4) based on the output signal (e.g., Q or Q-) of the controller 933 and the operation mode of the converter 240 (e.g., a signal related to the operation mode (e.g., BB_ENA of FIG. 9 or Buck_ENA of FIG. 10)). The electronic device 101 may control the duty cycle of the PWM signal (e.g., G1, G2, G3, and G4) by using the PWM control circuit 930. The electronic device 101 may control the duty cycle of the PWM signal (e.g., G1, G2, G3, and G4) based on a comparison result of the control voltage (e.g., Vc) and the integral voltage (e.g., VCT) and the signal of the oscillator 932, by using the PWM control circuit 930. Based on the duty cycle of the PWM signal (e.g., G1, G2, G3, and G4) being controlled, the output voltage (e.g., ELVDD) of the converter 240 may be controlled.

Referring to FIG. 9, according to an embodiment, the electronic device 101 may include a capacitor 991 and a capacitor 992.

FIG. 8 is a graph of the electronic device 101 that does not include the integral circuit 910, and FIG. 10 is a graph of the electronic device 101 that includes the integral circuit 910. In FIGS. 8 and 10, when Buck_ENA is the first signal (e.g., 1), that is, when the operation mode of the converter 240 is a buck mode, the first signal G1 corresponding to the first switch 441 and the second signal G2 corresponding to the second switch 442 may be alternately controlled, the third signal G3 corresponding to the third switch 443 may be controlled to be off, and the fourth signal G4 corresponding to the fourth switch 444 may be controlled to be off. In FIGS. 8 and 10, when Buck_ENA is the second signal (e.g., 0), that is, when the operation mode of the converter 240 is a buck-boost mode, the first signal G1 corresponding to the first switch 441 and the second signal G2 corresponding to the second switch 442 may be alternately controlled, the third signal G3 corresponding to the third switch 443 and the fourth signal G4 corresponding to the fourth switch 444 may be alternately controlled, the first signal G1 and the third signal G3 may be identically controlled, and the second signal G2 and the fourth signal G4 may be identically controlled. In FIGS. 8 and 10, (b) is a graph of the current IL of the inductor 445 of the converter 240 according to the signal of (a). In FIG. 8, (c) is a graph of the control voltage Vc and the signal (e.g., Vcs) related to a switching current according to the signal of (a). In FIG. 10, (c) is a graph of the control voltage Vc and the integral voltage VCT according to the signal of (a). In (c) of FIG. 10, it may be identified that the integral circuit 910 is reset, based on the second switch 442 (e.g., Q2) being controlled to be on. In FIGS. 8 and 10, (d) is a graph of the output voltage (ELVDD) of the converter 240 according to the signal of (a). Referring to FIGS. 8 and 10, when the operation mode of the converter 240 is changed from the buck mode to the buck-boost mode (e.g., when Buck_ENA is changed from the first signal (e.g., 1) to the second signal (e.g., 0)), it may be identified that the output voltage ELVDD of the converter 240 of FIG. 10 is more stably maintained than the output voltage ELVDD of the converter 240 of FIG. 8.

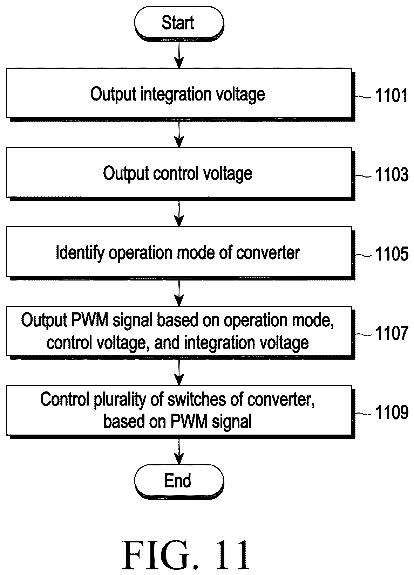

FIG. 11 is a flowchart illustrating an operation method of an electronic device according to an embodiment. FIG. 11 may be described with reference to the embodiment described above.

At least some of the operations of FIG. 11 may be omitted. The operation sequence of the operations of FIG. 11 may be changed. Operations other than the operations of FIG. 11 may be performed before, during, or after performing the operations of FIG. 11.

Referring to FIG. 11, in operation 1101, according to an embodiment, the electronic device 101 (e.g., the controller 260) may output an integral voltage. The electronic device 101 may output the integral voltage by using the integral circuit 910. The electronic device 101 may output the integral voltage (e.g., VCT of FIG. 9) by using the integral circuit 910, based on a signal (e.g., Vcs of FIG. 9) related to the switch current of the first switch 441 among the plurality of switches 441, 442, 443, and 444 of the converter 240. The operation of outputting the integral voltage may be understood as the operation of identifying the integral voltage. The electronic device 101 may control the integral circuit 910 to be reset, based on the second switch 442 of the converter 240 being on.

In operation 1103, according to an embodiment, the electronic device 101 (e.g., the controller 260) may output a control voltage. The electronic device 101 may output the control voltage by using the first comparison circuit 920. The electronic device 101 may output the control voltage (e.g., Vc of FIG. 9) by using the first comparison circuit 920 based on the output voltage (e.g., ELVDD of FIG. 9) of the converter 240 and the target voltage (e.g., Vt of FIG. 9) of the output voltage of the converter 240. The electronic device 101 may output the control voltage by using the first comparison circuit 920, based on the difference between the output voltage of the converter 240 and the target voltage and the integral value of the difference. The first comparison circuit 920 may output the control voltage by adding the difference between the output voltage of the converter 240 and the target voltage and the integral value of the difference.

In operation 1105, according to an embodiment, the electronic device 101 (e.g., the controller 260) may identify an operation mode (e.g., a buck mode, a boost mode, or a buck-boost mode) of the converter 240. The electronic device 101 may identify the operation mode of the converter 240, based on the input voltage (e.g., Vsys or VBAT of FIG. 9) of the converter 240 and the reference voltage (e.g., VTH of FIG. 9) of the input voltage of the converter 240. The electronic device 101 may identify the operation mode of the converter 240 by using the second comparison circuit 940. The electronic device 101 may identify the operation mode of the converter 240 by using the second comparison circuit 940, based on the input voltage (e.g., Vsys or VBAT of FIG. 9) of the converter 240 and the reference voltage (e.g., VTH of FIG. 9) of the input voltage of the converter 240. The second comparison circuit 940 may output a signal (e.g., BB_ENA of FIG. 9 or Buck_ENA of FIG. 10) related to the operation mode of the converter 240, based on the input voltage (e.g., Vsys or VBAT of FIG. 9) of the converter 240 and the reference voltage (e.g., VTH of FIG. 9) of the input voltage of the converter 240. The operation mode of the converter 240 and the signal related to the operation mode may be understood with reference to the description of FIG. 9.

In operation 1107, according to an embodiment, the electronic device 101 (e.g., the controller 260) may output a PWM signal. The electronic device 101 may output the PWM signal by using the PWM control circuit 930. The electronic device 101 may control the PWM control circuit 930 to output the PWM signal. The electronic device 101 may output the PWM signal (e.g., G1, G2, G3, and G4 of FIG. 9 and FIG. 10) by using the PWM control circuit 930, based on the operation mode of the converter 240 (e.g., a signal related to the operation mode (e.g., BB_ENA of FIG. 9 or Buck_ENA of FIG. 10), the control voltage (e.g., Vc of FIG. 9), and the integral voltage (e.g., VCT of FIG. 9). The PWM signal output may be understood with reference to the description of FIG. 9.

In operation 1109, according to an embodiment, the electronic device 101 (e.g., the controller 260) may control the plurality of switches 441, 442, 443, and 444 of the converter 240, based on the PWM signal. The method of controlling the plurality of switches 441, 442, 443, and 444 of the converter 240 may be understood with reference to the description of FIG. 9. By operation 1109, as in FIG. 10, the output voltage (e.g., ELVDD of FIG. 10) of the converter 240 may be maintained within a predetermined range of a target voltage (e.g., 3 [V]).

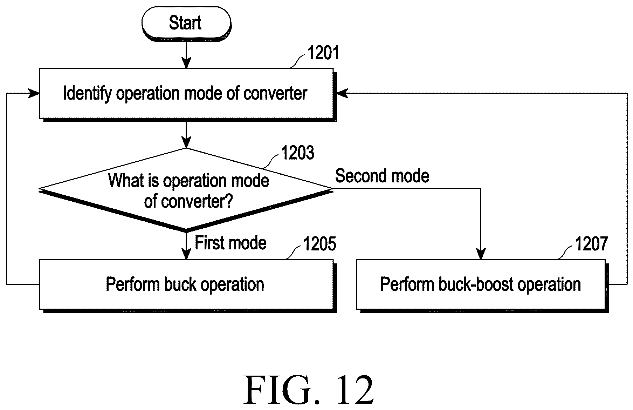

FIG. 12 is a flowchart illustrating an operation method of an electronic device according to an embodiment. FIG. 12 may be described with reference to the embodiment described above.

At least some of the operations of FIG. 12 may be omitted. The operation sequence of the operations of FIG. 12 may be changed. Operations other than the operations of FIG. 12 may be performed before, during, or after performing the operations of FIG. 12.

Referring to FIG. 12, in operation 1201, according to an embodiment, the electronic device 101 (e.g., the controller 260) may identify an operation mode (e.g., a buck mode, a boost mode, or a buck-boost mode) of the converter 240. Operation 1201 may be the same as or similar to operation 1105 of FIG. 11. Description overlapping with the description of operation 1105 in the description of operation 1201 may be omitted.

In operation 1203, according to an embodiment, the electronic device 101 (e.g., the controller 260) may perform the following operation, based on the operation mode of the converter 240. For example, the electronic device 101 may perform operation 1205, based on the operation mode of the converter 240 being a first mode (e.g., a buck mode). For example, the electronic device 101 may perform operation 1207, based on the operation mode of the converter 240 being a second mode (e.g., a buck-boost mode).

In operation 1205, according to an embodiment, the electronic device 101 (e.g., the controller 260) may perform a buck operation, based on the operation mode of the converter 240 being the first mode (e.g., a buck mode). For example, the electronic device 101 may control the plurality of switches 441, 442, 443, and 444 of the converter 240 to perform a buck operation of the converter 240, based on the operation mode of the converter 240 being the first mode (e.g., a buck mode).

In operation 1207, according to an embodiment, the electronic device 101 (e.g., the controller 260) may perform a buck-boost operation, based on the operation mode of the converter 240 being the second mode (e.g., a buck-boost mode). For example, the electronic device 101 may control the plurality of switches 441, 442, 443, and 444 of the converter 240 to perform a buck-boost operation of the converter 240, based on the operation mode of the converter 240 being the second mode (e.g., a buck-boost mode).

Those skilled in the art may understand that the embodiments described in the disclosure may be applied interchangeably within the scope of their applicability. For example, those skilled in the art may understand that at least some of the operations of the embodiments described in the disclosure may be applied after being omitted, and that at least some of the operations of the embodiments may be applied after being connected.

The technical task to be achieved in the disclosure may not be limited to the technical task mentioned above, and other technical tasks which are not mentioned may be clearly understood from the following description by those skilled in the art to which the disclosure pertains.

The effects obtainable from the disclosure may not be limited to the above-mentioned effects, and other effects which are not mentioned herein may be clearly understood from the following description by those skilled in the art to which the disclosure pertains.

According to an embodiment, an electronic device 101 may a battery 230, a load 250, a converter 240 configured to provide power to the load 250 based on power provided from the battery 230, an integral circuit 910, a first comparison circuit 920, a second comparison circuit 940, a pulse width modulation (PWM) control circuit 930, and a controller 260. The controller 260 may output, using the integral circuit 910, an integral voltage based on a signal associated with a switch current of a first switch 441 of a plurality of switches 441; 442; 443; and 444 of the converter 240. The controller 260 may output, using the first comparison circuit 920, a control voltage based on an output voltage of the converter 240 and a target voltage of the output voltage. The controller 260 may identify, using the second comparison circuit 940, an operation mode of the converter 240 based on an input voltage of the converter 240 and a reference voltage of the input voltage. The controller 260 may output, using the PWM control circuit 930, a PWM signal based on the operation mode, the control voltage, and the integral voltage. The controller 260 may control the plurality of switches 441; 442; 443; and 444 of the converter 240 based on the PWM signal.

According to an embodiment, the controller 260 may be configured to reset the integral circuit 910 based on a state of a second switch 442 of the plurality of switches 441; 442; 443; and 444 of the converter 240 being on.

According to an embodiment, the controller 260 may be configured to output, using the first comparison circuit 920, the control voltage based on a difference between the output voltage of the converter 240 and the target voltage and an integral value of the difference.

According to an embodiment, the first comparison circuit 920 may be configured to output the control voltage by adding the difference and the integral value.

According to an embodiment, the reference voltage may be greater than the target voltage.

According to an embodiment, the controller 260 may be configured to identify the operation mode of the converter 240 as a first mode based on the input voltage of the converter 240 exceeding the reference voltage. The controller 260 may be configured to identify the operation mode of the converter 240 as a second mode distinct from the first mode based on the input voltage of the converter 240 being equal to or lower than the reference voltage.

According to an embodiment, the controller 260 may be configured to control the plurality of switches 441; 442; 443; and 444 of the converter 240 so that the converter 240 performs a buck operation in the first mode. The controller 260 may be configured to control the plurality of switches 441; 442; 443; and 444 of the converter 240 so that the converter 240 performs a buck-boost operation in the second mode.

According to an embodiment, the converter 240 may include the first switch 441, a second switch 442, a third switch 443, a fourth switch 444, and an inductor 445. The first end of the first switch 441 may be electrically connected to the battery 230. The first end of the second switch 442 may be electrically connected to the second end of the first switch 441. The second end of the second switch 442 may be electrically connected to the ground. The first end of the third switch 443 may be electrically connected to the load 250. The first end of the fourth switch 444 may be electrically connected to the second end of the third switch 443. The second end of the fourth switch 444 may be electrically connected to the ground. The first end of the inductor 445 may be electrically connected to the second end of the first switch 441. The second end of the inductor 445 may be electrically connected to the second end of the third switch 443.

According to an embodiment, the controller 260 may be configured to, based on the operation mode of the converter 240 being the first mode, control the first switch 441 and the second switch 442 alternately, control the third switch 443 to be off, and control the fourth switch 444 to be on. The controller 260 may be configured to, based on the operation mode of the converter 240 being the second mode, control the first switch 441 and the second switch 442 alternately, control the third switch 443 and the fourth switch 444 alternately, control the first switch 441 and the third switch 443 identically, and control the second switch 442 and the fourth switch 444 identically.

According to an embodiment, the switch current of the first switch 441 may be a current flowing on the first end of the first switch 441 electrically connected to the battery 230.

According to an embodiment, a method of operating an electronic device 101 may include outputting an integral voltage based on a signal associated with a switch current of a first switch 441 of a plurality of switches 441; 442; 443; and 444 of the converter 240 of the electronic device 101. The method may include outputting a control voltage based on an output voltage of the converter 240 and a target voltage of the output voltage. The method may include identifying an operation mode of the converter 240 based on an input voltage of the converter 240 and a reference voltage of the input voltage. The method may include outputting a PWM signal based on the operation mode, the control voltage, and the integral voltage. The method may include controlling the plurality of switches 441; 442; 443; and 444 of the converter 240 based on the PWM signal.

According to an embodiment, the method may include resetting the integral circuit 910, based on a state of a second switch 442 of the plurality of switches 441; 442; 443; and 444 of the converter 240 being on.

According to an embodiment, the outputting the control voltage may include outputting the control voltage based on a difference between the output voltage of the converter 240 and the target voltage and an integral value of the difference.

According to an embodiment, the outputting the control voltage may include outputting the control voltage by adding the difference and the integral value.

According to an embodiment, the reference voltage may be greater than the target voltage.

According to an embodiment, the identifying the operation mode of the converter 240 may include identifying the operation mode of the converter 240 as a first mode based on the input voltage of the converter 240 exceeding the reference voltage. The operation mode of the converter 240 may include identifying the operation mode of the converter 240 as a second mode distinct from the first mode based on the input voltage of the converter 240 being equal to or lower than the reference voltage.

According to an embodiment, the controlling the plurality of switches 441; 442; 443; and 444 may include controlling the plurality of switches 441; 442; 443; and 444 of the converter 240 so that the converter 240 performs a buck operation in the first mode. The controlling the plurality of switches 441; 442; 443; and 444 may include controlling the plurality of switches 441; 442; 443; and 444 of the converter 240 so that the converter 240 performs a buck-boost operation in the second mode.

According to an embodiment, the converter 240 may include the first switch 441, a second switch 442, a third switch 443, a fourth switch 444, and an inductor 445. The first end of the first switch 441 may be electrically connected to the battery 230. The first end of the second switch 442 may be electrically connected to the second end of the first switch 441. The second end of the second switch 442 may be electrically connected to the ground. The first end of the third switch 443 may be electrically connected to the load 250. The first end of the fourth switch 444 may be electrically connected to the second end of the third switch 443. The second end of the fourth switch 444 may be electrically connected to the ground. The first end of the inductor 445 may be electrically connected to the second end of the first switch 441. The second end of the inductor 445 may be electrically connected to the second end of the third switch 443.

According to an embodiment, the controlling the plurality of switches 441; 442; 443; and 444 may include, based on the operation mode of the converter 240 being the first mode, controlling the first switch 441 and the second switch 442 alternately, controlling the third switch 443 to be off, and controlling the fourth switch 444 to be on. The controlling the plurality of switches 441; 442; 443; and 444 may include, based on the operation mode of the converter 240 being the second mode, controlling the first switch 441 and the second switch 442 alternately, controlling the third switch 443 and the fourth switch 444 alternately, controlling the first switch 441 and the third switch 443 identically, and controlling the second switch 442 and the fourth switch 444 identically.

According to an embodiment, the switch current of the first switch 441 may be a current flowing on the first end of the first switch 441 electrically connected to the battery 230 of the electronic device.

According to an embodiment, in a computer-readable recording medium in which instructions configured to perform at least one operation by the controller 260 of the electronic device 101 are stored, the at least one operation may include outputting an integral voltage based on a signal associated with a switch current of a first switch 441 of a plurality of switches 441; 442; 443; and 444 of the converter 240 of the electronic device 101. The at least one operation may include outputting a control voltage based on an output voltage of the converter 240 and a target voltage of the output voltage. The at least one operation may include identifying an operation mode of the converter 240 based on an input voltage of the converter 240 and a reference voltage of the input voltage. The at least one operation may include outputting a PWM signal based on the operation mode, the control voltage, and the integral voltage. The at least one operation may include controlling the plurality of switches 441; 442; 443; and 444 of the converter 240 based on the PWM signal.

According to an embodiment, the at least one operation may include resetting the integral circuit 910, based on a state of a second switch 442 of the plurality of switches 441; 442; 443; and 444 of the converter 240 being on.

According to an embodiment, the outputting the control voltage may include outputting the control voltage based on a difference between the output voltage of the converter 240 and the target voltage and an integral value of the difference.

According to an embodiment, the outputting the control voltage may include outputting the control voltage by adding the difference and the integral value.

According to an embodiment, the reference voltage may be greater than the target voltage.

According to an embodiment, the identifying the operation mode of the converter 240 may include identifying the operation mode of the converter 240 as a first mode based on the input voltage of the converter 240 exceeding the reference voltage. The operation mode of the converter 240 may include identifying the operation mode of the converter 240 as a second mode distinct from the first mode based on the input voltage of the converter 240 being equal to or lower than the reference voltage.

According to an embodiment, the controlling the plurality of switches 441; 442; 443; and 444 may include controlling the plurality of switches 441; 442; 443; and 444 of the converter 240 so that the converter 240 performs a buck operation in the first mode. The controlling the plurality of switches 441; 442; 443; and 444 may include controlling the plurality of switches 441; 442; 443; and 444 of the converter 240 so that the converter 240 performs a buck-boost operation in the second mode.

According to an embodiment, the converter 240 may include the first switch 441, a second switch 442, a third switch 443, a fourth switch 444, and an inductor 445. The first end of the first switch 441 may be electrically connected to the battery 230. The first end of the second switch 442 may be electrically connected to the second end of the first switch 441. The second end of the second switch 442 may be electrically connected to the ground. The first end of the third switch 443 may be electrically connected to the load 250. The first end of the fourth switch 444 may be electrically connected to the second end of the third switch 443. The second end of the fourth switch 444 may be electrically connected to the ground. The first end of the inductor 445 may be electrically connected to the second end of the first switch 441. The second end of the inductor 445 may be electrically connected to the second end of the third switch 443.

According to an embodiment, the controlling the plurality of switches 441; 442; 443; and 444 may include, based on the operation mode of the converter 240 being the first mode, controlling the first switch 441 and the second switch 442 alternately, controlling the third switch 443 to be off, and controlling the fourth switch 444 to be on. The controlling the plurality of switches 441; 442; 443; and 444 may include, based on the operation mode of the converter 240 being the second mode, controlling the first switch 441 and the second switch 442 alternately, controlling the third switch 443 and the fourth switch 444 alternately, controlling the first switch 441 and the third switch 443 identically, and controlling the second switch 442 and the fourth switch 444 identically.

According to an embodiment, the switch current of the first switch 441 may be a current flowing on the first end of the first switch 441 electrically connected to the battery 230 of the electronic device.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program) including one or more instructions that are stored in a storage medium that is readable by a machine (e.g., the electronic device). For example, a processor (e.g., the controller) of the machine may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101) comprising:
a battery (230);
a load (250);
a converter (240) configured to provide power to the load (250), based on power provided from the battery (230);
an integral circuit (910);
a first comparison circuit (920);
a second comparison circuit (940);
a pulse width modulation (PWM) control circuit (930); and
a controller (260) configured to:
output, using the integral circuit (910), an integral voltage, based on a signal associated with a switch current of a first switch (441) of a plurality of switches (441; 442; 443; 444) of the converter (240),
output, using the first comparison circuit (920), a control voltage, based on an output voltage of the converter (240) and a target voltage of the output voltage,
identify, using the second comparison circuit (940), an operating mode of the converter (240), based on an input voltage of the converter (240) and a reference voltage of the input voltage,
output, using the PWM control circuit (930), a PWM signal, based on the operating mode, the control voltage, and the integral voltage, and
control the plurality of switches (441; 442; 443; 444) of the converter (240), based on the PWM signal.

2. The electronic device (101) of claim 1, wherein the controller (260) is configured to reset the integral circuit, based on a state of a second switch (442) of the plurality of switches (441; 442; 443; 444) of the converter (240) being on.

3. The electronic device (101) of claim 1 or 2, wherein the controller (260) is configured to output, using the first comparison circuit (920), the control voltage, based on a difference between the output voltage of the converter (240) and the target voltage and an integral value of the difference.

4. The electronic device (101) of any one of claims 1 to 3, wherein the first comparison circuit (920) is configured to output the control voltage by adding the difference and the integral value.

5. The electronic device (101) of any one of claims 1 to 4, wherein the reference voltage is greater than the target voltage.

6. The electronic device (101) of any one of claims 1 to 5, wherein the controller (260) is configured to:
identify the operation mode of the converter (240) as a first mode, based on the input voltage of the converter (240) exceeding the reference voltage, and
identify the operation mode of the converter (240) as a second mode distinct from the first mode, based on the input voltage of the converter (240) being equal to or lower than the reference voltage.

7. The electronic device (101) of any one of claims 1 to 6, wherein the controller (260) is configured to:
control the plurality of switches (441; 442; 443; 444) of the converter (240) to perform a buck operation in the first mode, and
control the plurality of switches (441; 442; 443; 444) of the converter (240) to perform a buck-boost operation in the second mode.

8. The electronic device (101) of any one of claims 1 to 7,
wherein the converter (240) includes the first switch (441), a second switch (442), a third switch (443), a fourth switch (444), and an inductor (445),
wherein a first end of the first switch (441) is electrically connected to the battery (230),
wherein a first end of the second switch (442) is electrically connected to a second end of the first switch (441),
wherein a second end of the second switch (442) is electrically connected to a ground,
wherein a first end of the third switch (443) is electrically connected to the load (250),
wherein a first end of the fourth switch (444) is electrically connected to a second end of the third switch (443),
wherein a second end of the fourth switch (444) is electrically connected to the ground,
wherein a first end of the inductor (445) is electrically connected to the second end of the first switch (441), and
wherein a second end of the inductor (445) is electrically connected to the second end of the third switch (443).

9. The electronic device (101) of any one of claims 1 to 8, wherein the controller (260) is configured to:
based on the operating mode of the converter (240) being the first mode, control the first switch (441) and the second switch (442) alternately, control the third switch (443) to be off, and control the fourth switch (444) to be on, and
based on the operating mode of the converter (240) being the second mode, control the first switch (441) and the second switch (442) alternately, control the third switch (443) and the fourth switch (444) alternately, control the first switch (441) and the third switch (443) identically, and control the second switch (442) and the fourth switch (444) identically.

10. The electronic device (101) of any one of claims 1 to 9, wherein the switch current of the first switch (441) is a current flowing on a first end of the first switch (441) electrically connected to the battery (230).

11. A method of operating an electronic device (101), the method comprising:
outputting an integral voltage, based on a signal associated with a switch current of a first switch (441) among a plurality of switches (441; 442; 443; and 444) of a converter (240) of the electronic device (101);
outputting a control voltage, based on an output voltage of the converter (240) and a target voltage of the output voltage;
identifying an operating mode of the converter (240), based on an input voltage of the converter (240) and a reference voltage of the input voltage;
outputting a pulse width modulation (PWM) signal, based on the operating mode, the control voltage, and the integral voltage, and
controlling the plurality of switches (441; 442; 443; and 444) of the converter (240), based on the PWM signal.

12. The method of claim 11, further comprising resetting the integral circuit (910), based on a state of a second switch (442) among the plurality of switches (441; 442; 443; and 444) of the converter (240) being on.

13. The method of claim 11 or 12, wherein the outputting of the control voltage comprises outputting the control voltage, based on a difference between the output voltage of the converter (240) and the target voltage and an integral value of the difference.

14. The method of any one of claims 11 to 13, wherein the outputting of the control voltage comprises outputting the control voltage by adding the difference and the integral value.

15. The method of any one of claims 11 to 14, wherein the reference voltage is greater than the target voltage.
